# EUROPÄISCHE PATENTSCHRIFT

(11) **EP 2 590 281 B1**
(45) Veröffentlichungstag und Bekanntmachung des Hinweises auf die Patenterteilung: **20.12.2017**
(21) Anmeldenummer: 12306360.4
(22) Anmeldetag: 31.10.2012
(51) Int. Cl.: H02G 3/06

(54) **Leitungsführungskanal aus Metall mit Haube zur Schnittkaschierung**
Conduct channel made of metal with hood for section covering
Canal de guidage de conduite en métal avec capot pour recouvrement de jonction

(30) Priorität: 04.11.2011 DE 202011107458 U
(43) Veröffentlichungstag der Anmeldung: 08.05.2013
(73) Patentinhaber: Tehalit GmbH, 67716 Heltersberg (DE)
(72) Erfinder: Zimmermann, Otto, 66999 Hinterweidenthal (DE)
(74) Vertreter: Nuss, Laurent

(56) Entgegenhaltungen:
- WO-A2-2008/153333
- DE-U1- 29 914 136
- DE-U1- 29 920 280
- GB-A- 2 307 111
- US-A1- 2002 036 095

## Beschreibung

Die vorliegende Erfindung betrifft einen Leitungsführungskanal aus Metall zur Aufnahme von Kabel oder Leitungen, bei dem Schnitt- und Stoßkanten aufeinanderstoßender Kabelkanalabschnitte mittels einer Haube kaschiert werden.

Leitungsführungskanäle bestehen aus einem Unterteil und einem Oberteil (oder Deckel) und werden entweder am Boden im Bereich der Sockelleiste, an der Wand oder als Deckenkanal verlegt. Ein solcher Leitungsführungskanal ist beispielsweise in der DE 299 20 280 U1 beschrieben. Bei aufeinanderstoßenden Kabelkanalabschnitten entstehen unschöne Stoßkanten, die kaschiert werden müssen. Bei Leitungsführungskanälen, die nicht aus Metall bestehen, sind spezielle Formteile bekannt, um die Spalte an der Oberseite und den Seitenwänden des Kanalsystems abzudecken.

Solche Schnittkaschierungen für Kabelkanäle sind beispielsweise in der DE 20 2007 006 989 U1 oder der EP 22 73 638 A2 beschrieben. Die darin gezeigten Formteile werden zur Schnittkaschierung von Schnittkanten aufeinander stoßender Kabelkanalabschnitte und/oder deren Enden in den Kanal eingesetzt. Sie umfassen eine leistenförmige Frontblende mit oberen und unteren Rastelementen zur Befestigung der Klammer an einem Leitungsführungskanal oder Kabelkanal. Für die Montage eines Kanalsystems sind daher neben einem Unterteil und einem Oberteil auch solche separaten Schnittkaschierungselemente erforderlich.

Bei Metallkanälen wurden die Unterteile und Oberteile bislang auf die erforderliche Länge zurecht geschnitten. Die Schnittkanten, die dabei entstehen, wurden entweder nur mit dem Oberteil (d.h. an der Ober- oder Frontseite) oder gar nicht kaschiert. Hierfür wurde das Oberteil gegenüber dem Unterteil an der Übergangsstelle leicht versetzt angeordnet, sodass das betreffende Oberteilstück die Kabelkanalabschnitte an der Übergangsstelle abgedeckt und zusammengehalten hat. Seitlich sind bei dieser Lösung jedoch nach wie vor unschöne Schnittkanten zu erkennen. Dies ist unbefriedigend.

Es ist daher Aufgabe der vorliegenden Erfindung, einen verbesserten Leitungsführungskanal anzugeben, bei dem die Schnittkanten aufeinanderstoßender Kabelkanalabschnitte an der Oberseite und seitlich kaschiert werden.

Diese Aufgabe wird gelöst durch einen Leitungsführungskanal mit den Merkmalen des Anspruches 1. Bevorzugte Ausführungsformen finden sich in den Unteransprüchen wieder.

Der erfindungsgemäße Leitungsführungskanal besteht aus einem U-förmigen Unterteil mit einem Boden und seitlichen Seitenwänden sowie einem U-förmigen Oberteil mit Seitenwänden und Formprofilen. An den Schenkelenden der Seitenwände des Unterteils sind Deckelhalteprofile ausgebildet, die mit den entsprechenden Formprofilen des Oberteils korrespondieren, um einen sicheren Halt des Deckels mit dem Unterteil sicherzustellen. Zur Schnittkaschierung aufeinanderstoßender Kabelkanalabschnitte des Leitungsführungskanals aus Metall an der Übergangsstelle ist erfindungsgemäß eine U-förmige Haube vorgesehen, die an der Übergangsstelle teilweise über das Oberteil und das Unterteil gestülpt wird. Die Haube besteht aus einer Grundplatte und zwei Seitenwänden. Es umschließt somit sowohl die Ober- oder Frontseite als auch die Seiten der Übergangsstelle vollständig. An den beiden Seiteninnenwänden befindet sich jeweils ein Vorsprung, der entsprechend der Befestigung des Oberteils mit dem Unterteil des Leitungsführungskanals, in eine am Unterteil des Leitungsführungskanals ausgebildete Rinne greift. Durch die Spannkraft der beiden Seitenwände der Haube werden die beiden Unterteile der aufeinanderstoßenden Kabelkanalabschnitte fest zusammen gehalten. Dadurch wird die Übergangsstelle stabilisiert. Daneben wird die Haube an den beiden aufeinanderstoßenden Kabelkanalabschnitten beidseitig fest gehalten.

Mittels der aufgesetzten Haube werden unschöne Stoßkanten und Schnittstellen aufeinanderstoßender Kabelkanalabschnitte eines Leitungsführungskanals aus Metall sowohl von der Oberseite als auch seitlich kaschiert.

Die seitlichen Vorsprünge an der Innenseite werden vorzugsweise durch Prägungen der Außenseite der Haube erzeugt. Diese sind als Einbuchtungen erkennbar.

Vorzugsweise ist die Haube einstückig aus Metall ausgebildet. Vorzugsweise sind die Vorsprünge an der Innenseite bzw. die Einbuchtungen an der Haube an den Seitenwänden der Haube zentriert ausgebildet.

Neben der Schnittkaschierungsfunktion und dem Zusammenhalt der aufeinanderstoßenden Kabelkanalabschnitte kommt der erfindungsgemäßen Haube in einer Ausführungsvariante auch eine Erdungsfunktion zu. Bei einer Ausgestaltung aus Metall stellt sie den für die Erdungsfunktion erforderliche Potenzialausgleich sicher, indem sie die beiden aufeinanderstoßenden Kabelkanalabschnitte elektrisch miteinander verbindet. Gegebenenfalls können an der Haube zusätzliche Erdungselemente ausgebildet sein, die für einen sicheren Potenzialausgleich erforderlich sind.

Die erfindungsgemäße Konstruktion ermöglicht nicht nur die Kaschierung von geraden Kabelkanalabschnitten, sondern auch von Inneneck, Außeneck, Flachwinkel und T/K-Stücken.

Die Erfindung wird in den nachfolgenden Zeichnungen näher erläutert.

Es zeigen:
Fig. 1: den erfindungsgemäßen Leitungsführungskanal mit Haube zur Schnittkaschierung,
Fig. 2: eine Querschnittsdarstellung der einzelnen Elemente des Leitungsführungskanals.

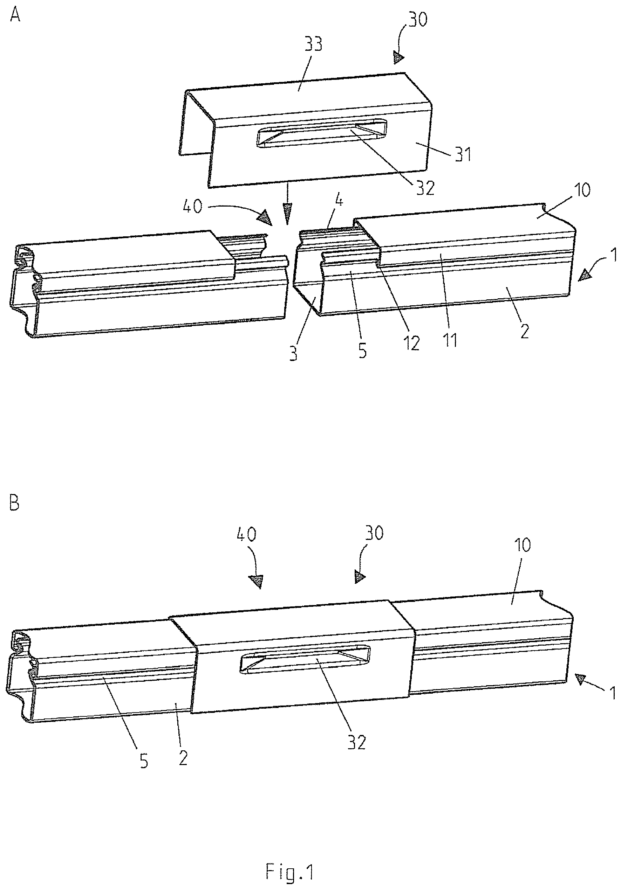

In Fig. 1A sind die Bestandteile des erfindungsgemäßen Leitungsführungskanals aus Metall gezeigt. Man erkennt zwei aufeinanderstoßende Kabelkanalabschnitte, jeweils bestehend aus einem Unterteil 1 sowie einem Oberteil 10. Das Unterteil 1 ist U-förmig ausgebildet und besteht aus Seitenwänden 2 und einem Boden 3. An den Schenkelenden der Seitenwände 2 sind Deckelhalteprofile 4 ausgebildet. Die Deckelhalteprofile 4 sind so geformt, dass sie eine Rinne 5 bilden. In diese Rinne 5 werden die Formprofile 12 des Deckels 10 eingerastet. Dadurch hat der Deckel 10 mit dem Unterteil 1 einen sicheren Halt. An der Übergangsstelle 40 sind die Deckel 10 ausgespart. Stattdessen wird an der Übergangsstelle der aufeinanderstoßenden Kabelkanalabschnitte eine Haube 30 aufgesetzt. Die Haube 30 ist U-förmig ausgestaltet und besteht aus einer Grundplatte 33 und zwei Seitenwänden 31. An den äußeren Seitenwänden 31 sind jeweils zentriert Einbuchtungen 32 ausgebildet, welche an den Innenseiten Vorsprünge 34 bilden.

In Fig. 1B ist die Haube 30 an der Übergangsstelle 40 des Kanalsystems aufgesetzt. Hierbei greifen die durch die Einbuchtungen 32 bedingten Vorsprünge 34 in die am Unterteil 1 ausgebildeten Rinnen 5. Die beiden Seitenwände 2 des Unterteils 1 werden fest zusammen gehalten und die Übergangstelle 40 vollständig von der Haube 30 kaschiert.

Die erfindungsgemäße Haube 30 ist so ausgestaltet, dass selbst große Spalte oder Stoßkanten kaschiert werden können. Die Oberteile 10 können entsprechend der Länge der Übergangsstelle 40 verschoben werden, sodass der Übergangsbereich 40 vollständig von der Haube 30 abgedeckt wird. Es ist daher gar nicht erforderlich, dass die aufeinanderstoßenden Kabelkanalabschnitte sich berühren oder fluchten.

Die Haube 30 ist vorzugsweise aus Metall ausgebildet und gewährleistet darüber hinaus in einer Ausführungsvariante einen Potenzialausgleich zwischen den aufeinanderstoßenden Kabelkanalabschnitten. Dadurch ist der für eine Erdungsfunktion erforderlicher Stromfluss sichergestellt.

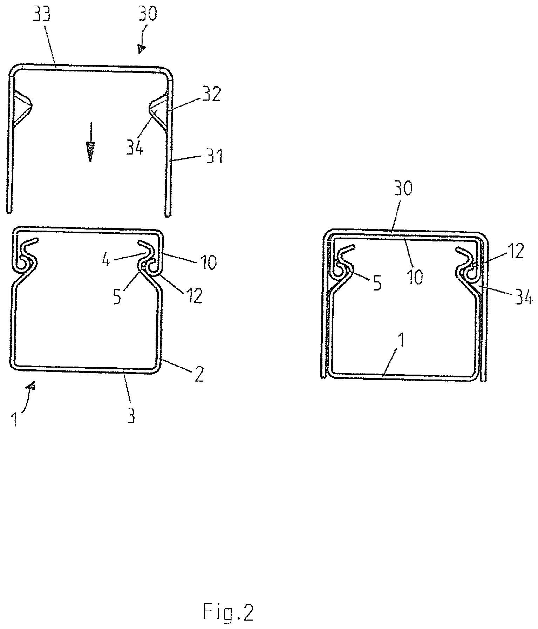

In Fig. 2 ist der Querschnitt des Leitungsführungskanals gezeigt. Die Haube 32 besitzt an den Seitenwänden 31 jeweils Einbuchtungen 32, die an der Innenseite die Vorsprünge 34 bilden. Auf das Unterteil 1 ist das Oberteil 10 aufgesetzt. Dabei korrespondieren die Formprofile 12 des Oberteils 10 mit den Deckelhalteprofilen 4 des Unterteils 1. In der gezeigten Ausführungsform ist das Formprofil als Rundprofil ausgeformt und wird in einer von den Deckelhalteprofilen 4 des Unterteils 1 gebildete Rinne 5 geführt und mit dieser verrastet. Die Haube 30 wird über das Oberteil 10 und das Unterteil 1 gestülpt. Dabei greifen die Vorsprünge 34 der Haube 30 an der Übergangsstelle 40 in die am Unterteil 1 seitlich ausgebildete Rinne 5. Die beiden aufeinanderstoßenden Kabelkanalabschnitte werden durch die Haube 30 fest zusammen gehalten und die Schnittstellen und Stoßkanten an der Übergangsstelle 40 kaschiert.

## Patentansprüche

1. Leitungsführungskanal aus Metall mit mehreren Kabelkanalabschnitten zur Aufnahme von Kabel oder Leitungen, umfassend für jeden Kabelkanalabschnitt:
- ein U-förmiges Unterteil (1) mit einem Boden (3) und Seitenwänden (2) mit daran ausgebildeten Deckelhalteprofilen (4),
- ein U-förmiges Oberteil (10) mit Seitenwänden (11) und daran ausgebildeten Formprofilen (12), welche mit den Deckelhalteprofilen (4) des Unterteils (1) korrespondieren, wobei an der Übergangsstelle (40) der aufeinanderstoßenden Kabelkanalabschnitte eine U-förmige Haube (30) vorgesehen ist, die aus einer Grundplatte (33) und zwei Seitenwänden (31) besteht, wobei an den Innenseiten der beiden Seitenwände (31) jeweils ein Vorsprung (34) vorgesehen ist, der in eine am Unterteil (1) des Leitungsführungskanals ausgebildeten Rinne (5) greift, und die Abschnitte des Oberteils (10) und des Unterteils (1) des Leitungsführungskanals an der Übergangsstelle (40) überlappt , **dadurch gekennzeichnet, dass** die Vorsprünge (34) der Haube (30) über Einbuchtungen (32) an den Außenseiten der Seitenwand (31) gebildet werden.

2. Leitungsführungskanal nach Anspruch 1, **dadurch gekennzeichnet, dass** die Einbuchtungen (32) an den Seitenwänden (31) der Haube (30) zentriert ausgebildet sind.

3. Leitungsführungskanal nach einem der Ansprüche 1 oder 2, **dadurch gekennzeichnet, dass** die am Unterteil (1) ausgebildeten Rinnen (5) von den Deckelhalteprofilen (4) gebildet werden.

4. Leitungsführungskanal nach einem der Ansprüche 1 bis 3, **dadurch gekennzeichnet, dass** die am Oberteil (10) ausgebildeten Formprofile (12) als Rundprofile ausgebildet sind und in die seitlichen Rinnen (5) der Deckelhalteprofile (4) des Unterteils (1) greifen.

5. Leitungsführungskanal nach einem der Ansprüche 1 bis 4, **dadurch gekennzeichnet, dass** die Grundplatte (33) und die Seitenwände (31) der U-förmigen Haube (30) die Enden der Oberteile (10) und der Unterteile (1) der aufeinanderstoßenden Kabelkanalabschnitte an den Stirnseiten teilweise überlappt.

6. Leitungsführungskanal nach einem der Ansprüche 1 bis 5, **dadurch gekennzeichnet, dass** die Oberteile (10) an der Übergangsstelle (40) gegenüber den Unterteilen (1) leicht versetzt angeordnet sind.

7. Leitungsführungskanal nach einem der Ansprüche 1 bis 5, **dadurch gekennzeichnet, dass** es sich bei dem Kabelkanalabschnitt um ein Inneneck, ein Außeneck, einen Flachwinkel oder ein T/K-Stück handelt.

## Claims

1. Line routing duct or conduct channel of metal having a plurality of cable duct portions for receiving cables or lines, comprising for each cable duct portion:
- a U-shaped lower part (1) having a bottom (3) and sidewalls (2) with cover holding profiles (4) formed thereon,
- a U-shaped upper part (10) having side walls (11) and shaped profiles (12) formed thereon which correspond with the cover holding profiles (4) of the lower part (1), wherein a U-shaped hood (30) is provided at the transition point (40) of the abutting cable duct portions and consists of a base plate (33) and two side walls (31), wherein a projection (34) is provided on each of the inner sides of the two side walls (31), which projection engages in a groove (5) formed on the lower part (1) of the line routing duct and overlaps the portions of the upper part (10) and of the lower part (1) of the line routing duct at the transition point (40), **characterized in that** the projections (34) of the hood (30) are formed by means of indentations (32) on the outer sides of the side wall (31).

2. Line routing duct according to Claim 1, **characterized in that** the indentations (32) on the side walls (31) of the hood (30) are formed in a centred manner.

3. Line routing duct according to either of Claims 1 and 2, **characterized in that** the grooves (5) formed on the lower part (1) are formed by the cover holding profiles (4).

4. Line routing duct according to one of Claims 1 to 3, **characterized in that** the shaped profiles (12) formed on the upper part (10) are formed as round profiles and engage in the lateral grooves (5) of the cover holding profiles (4) of the lower part (1).

5. Line routing duct according to one of Claims 1 to 4, **characterized in that** the base plate (33) and the side walls (31) of the U-shaped hood (30) partially overlap the ends of the upper parts (10) and of the lower parts (1) of the abutting cable duct portions at the end sides.

6. Line routing duct according to one of Claims 1 to 5, **characterized in that** the upper parts (10) are arranged with a slight offset with respect to the lower parts (1) at the transition point (40).

7. Line routing duct according to one of Claims 1 to 5, **characterized in that** the cable duct portion is an internal corner, an external corner, a flat angle or a T/cross-piece.

## Revendications

1. Caniveau de câblage en métal, avec plusieurs sections de conduit de câbles destinées à recevoir des câbles ou des lignes, comprenant pour chaque section de conduit de câbles :
- une partie inférieure (1) en forme de U, avec un fond (3) et des parois latérales (2) sur lesquelles sont configurés des profilés (4) de maintien de couvercle,
- une partie supérieure (10) en forme de U, avec des parois latérales (11) et avec des profilés façonnés (12) configurés sur celles-ci, qui correspondent avec les profilés (4) de maintien de couvercle de la partie inférieure (1), sachant qu'un capot (30) en forme de U est prévu au niveau du point de jonction (40) des sections de conduit de câbles en aboutement mutuel, capot qui est constitué d'une plaque de base (33) et de deux parois latérales (31), sachant qu'une saillie (34) est respectivement prévue sur les côtés intérieurs des deux parois latérales (31), saillie qui s'engage dans une rainure (5) configurée sur la partie inférieure (1) du caniveau de câblage, et capot qui recouvre les sections de la partie supérieure (10) et de la partie inférieure (1) du caniveau de câblage au niveau du point de jonction (40),
**caractérisé en ce que** les saillies (34) du capot (30) sont formées au moyen de creux (32) sur les côtés extérieurs de la paroi latérale (31).

2. Caniveau de câblage selon la revendication 1, **caractérisé en ce que** les creux (32) sont configurés de manière centrée sur les parois latérales (31) du capot (30).

3. Caniveau de câblage selon l'une des revendications 1 ou 2, **caractérisé en ce que** les rainures (5) configurées sur la partie inférieure (1) sont formées par les profilés (4) de maintien de couvercle.

4. Caniveau de câblage selon l'une des revendications 1 à 3, **caractérisé en ce que** les profilés façonnés (12) configurés sur la partie supérieure (10) sont configurés sous la forme de profilés ronds et s'engagent dans les rainures latérales (5) des profilés (4) de maintien de couvercle de la partie inférieure (1).

5. Caniveau de câblage selon l'une des revendications 1 à 4, **caractérisé en ce que** la plaque de base (33) et les parois latérales (31) du capot (30) en forme de U recouvrent partiellement au niveau des côtés frontaux les extrémités des parties supérieures (10) et des parties inférieures (1) des sections de conduit de câbles en aboutement mutuel.

6. Caniveau de câblage selon l'une des revendications 1 à 5, **caractérisé en ce que** les parties supérieures (10) sont disposées, au niveau du point de jonction (40), légèrement en déport par rapport aux parties inférieures (1).

7. Caniveau de câblage selon l'une des revendications 1 à 5, **caractérisé en ce que** la section de conduit de câbles est un coin intérieur, un coin extérieur, une équerre plate ou un élément en T/K.
